# EUROPEAN PATENT SPECIFICATION

(11) **EP 1 036 994 B1**
(45) Date of publication and mention of the grant of the patent: **10.08.2005**
(21) Application number: 00102378.7
(22) Date of filing: 04.02.2000
(51) Int. Cl.: F24F 11/00, B60H 1/32

(54) **Air conditioner**
Klimaanlage
Dispositif de conditionnement d'air

(30) Priority: 16.03.1999 JP 7029799
(43) Date of publication of application: 20.09.2000
(73) Proprietor: MATSUSHITA ELECTRIC INDUSTRIAL CO., LTD., Kadoma-shi, Osaka (JP)
(72) Inventor: Fukumoto, Minoru, Nara-shi, Nara 630-8114 (JP); Nishii, Nobuyuki, Otsu-shi, Shiga 520-2277 (JP); Funami, Hitoshi, Ikoma-shi, Nara 630-0123 (JP); Makino, Masahiko, Yasu-gun, Shiga 520-2435 (JP)
(74) Representative: Eisenführ, Speiser & Partner

(56) References cited:
- EP-A- 0 539 163
- EP-A- 0 698 769
- US-A- 5 519 301

## Description

### BACKGROUND OF THE INVENTION

### (Field of the Invention)

The present invention relates generally to an air conditioner and, in particular but not exclusively, to an air conditioner that is driven by a power source via an inverter at a low voltage and ensures the reliability of component parts or devices even if relatively large electric current flows through cables, connectors, terminals, a motor-driven compressor and the like.

### (Description of the Related Art)

Conventional electric vehicles or hybrid cars are generally provided with, for example, a plurality of 12-volt batteries, and a compressor for an air conditioner mounted therein is supplied with 200-300 volts of electricity.

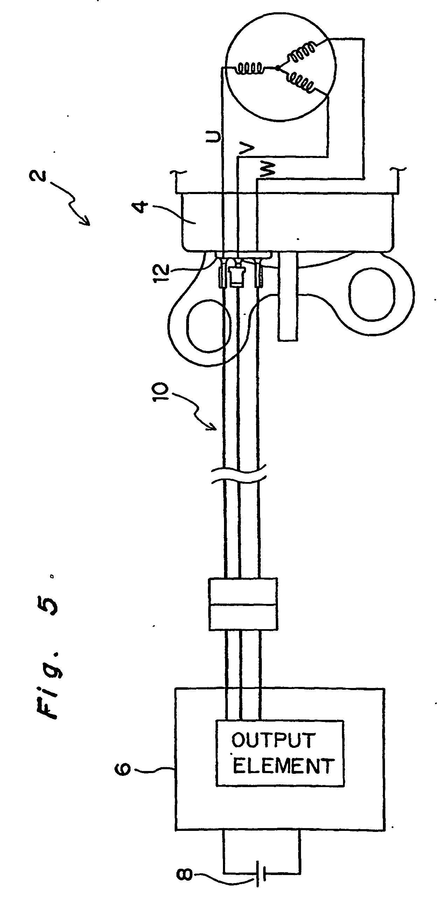

Fig. 5 schematically depicts an air conditioner 2 for a conventional electric vehicle. As shown therein, the air conditioner 2 is provided with a motor-driven compressor 4 and a driving device 6. Electric power from a power source 8 is supplied to the motor-driven compressor 4 via the driving device 6, a wiring system 10 and the like. In applications where the voltage of the power source ranges from 200 to 300 volts, only 6-7 amperes of electric current flows through each electric wire or each pin of a terminal 12 fitted to a shell of the motor-driven compressor 4. For this reason, the diameter of cables to be used is relatively small, and 2-mm² cables are generally used, for example.

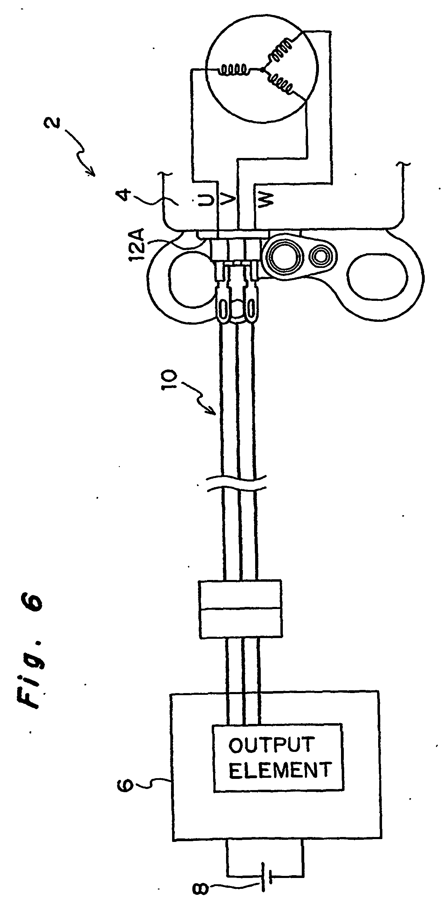

Some of the motor-driven compressors allow electric current greater than that flowing through the above-described motor-driven compressor 4 to flow therethrough. In motor-driven compressors through which, for example, 15-20 amperes of electric current flows, wiring must be done using about 3-mm² cables. Accordingly, as shown in Fig. 6, it is necessary to use a terminal 12A larger than the terminal 12 shown in Fig. 5.

Recently, a study of electric vehicles or hybrid cars for practical use is being made at a high pace, and from the viewpoint of safety, there is a tendency to use a 36-volt power source, for example, by connecting three 12-volt batteries in series.

However, if a motor-driven compressor is supplied with 36 bolts of electricity, about 60-80 amperes of large electric current flows through output elements of the driving device, a wiring system between the driving device and the motor-driven compressor, a terminal or stator leads of the motor-driven compressor, and the like. In that case, if the component parts on the air conditioner shown in Fig. 6 are still used, electric current that flows therethrough exceeds their specification limits. As a result, such component parts generate heat and cause a loss, resulting in a reduction in reliability. Furthermore, there is a danger of smoke emission or catching fire.

Accordingly, it is necessary to use component parts of relatively large electric capacities, but there arises a problem in that the driving device or wiring parts such as connectors become large-sized, or the terminal cannot be installed on the motor-driven compressor having only a limited installation space.

It is also necessary for electric wires to have an increased diameter to allow 60-80 amperes of electric current to flow therethrough. The increase in diameter hardens the electric wires and reduces the degree of freedom of wiring, thus making the wiring very difficult.

### SUMMARY OF THE INVENTION

The present invention has been developed to overcome the above-described disadvantages.

It is accordingly an objective of the present invention to provide an air conditioner which ensures the reliability of component parts without enlarging the electric capacities thereof, even if relatively large electric current flows therethrough when the air conditioner is driven at a low voltage.

Another objective of the present invention is to provide the air conditioner of the above-described type which can increase the feeding efficiency by reducing a loss caused by the relatively large electric current and can enhance the workability during wiring.

In accomplishing the above and other objectives, the air conditioner according to the present invention includes a motor-driven compressor and a driving device for driving the motor-driven compressor, and is characterized by a wiring system for electrically connecting the motor-driven compressor and the driving device to each other, wherein the wiring system is divided into at least two circuits.

With this arrangement, it is possible to ensure the reliability of components parts such, for example, as connectors constituting the wiring system without enlarging the electric capacities thereof. Furthermore, electric current flowing through one cable becomes small and, hence, a loss caused by large electric current is reduced, thus enhancing the feeding efficiency. Also, compared with a single circuit, the diameter of cables to be used can be reduced, facilitating the wiring work and enhancing the wiring workability.

Advantageously, a motor contained in the motor-driven compressor has a stator winding divided into at least two circuits. By so doing, the size of coil ends can be reduced and, hence, a junction point for tying them up in a bundle is not needed. Moreover, because the diameter of an electric wire for each phase can be reduced, the degree of freedom of wiring is enhanced, thus improving the assembling work within the compressor.

It is preferred that the at least two circuits of the stator winding has respective neutral points electrically connected to each other. The electrical connection of the neutral points maintains them at the same potential and eliminates a change in torque, resulting in a highly reliable motor-driven compressor.

Conveniently, the motor-driven compressor has a plurality of leads connected to the stator winding, and each lead is divided into at least two. Accordingly, the diameter of each lead can be reduced, enhancing the connecting workability.

Again conveniently, the motor-driven compressor has at least two terminals secured to a shell and electrically connected to the wiring system. By so doing, the size of each terminal can be reduced, making it possible to install it to a limited installation space of the shell.

Advantageously, the driving device includes at least two output elements each electrically connected to one of the at least two circuits of the wiring system. This construction makes it possible to use small-sized output elements, resulting in a reduction in size of the driving device.

### BRIEF DESCRIPTION OF THE DRAWINGS

The above and other objectives and features of the present invention will become more apparent from the following description of preferred embodiments thereof with reference to the accompanying drawings, throughout which like parts are designated by like reference numerals, and wherein:
Fig. 1 is a schematic wiring diagram of an air conditioner according to a first embodiment of the present invention;
Fig. 2 is a wiring diagram of a stator mounted in a modified motor-driven compressor in the air conditioner of Fig. 1;
Fig. 3 is a view similar to Fig. 2, but depicting a stator in an air conditioner according to a second embodiment of the present invention;
Fig. 4 is a wiring diagram of a driving device in an air conditioner according to a third embodiment of the present invention;
Fig. 5 is a schematic wiring diagram of a conventional air conditioner; and
Fig. 6 is a schematic wiring diagram of another conventional air conditioner.

### DETAILED DESCRIPTION OF THE PREFERRED EMBODIMENTS

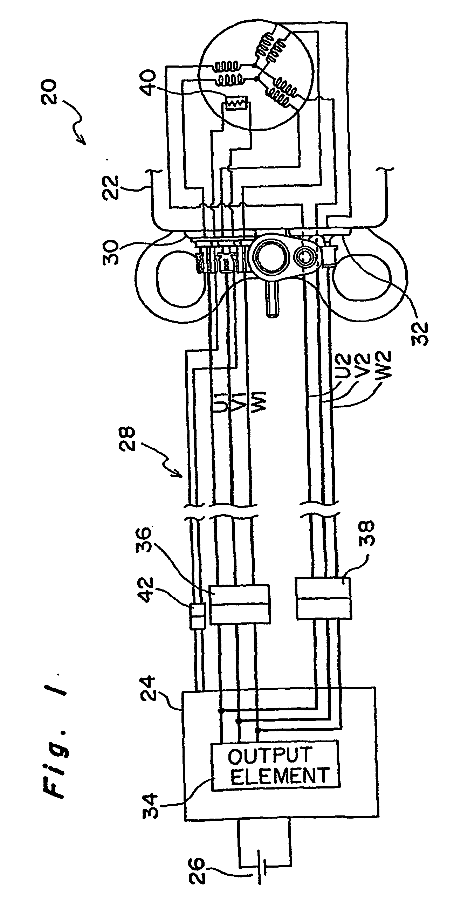

Referring now to the drawings, there is schematically shown in Fig. 1 an air conditioner 20 according to a first embodiment of the present invention, which is intended to be used in electric vehicles. The air conditioner 20 is provided with a motor-driven compressor 22 and a driving device 24 for driving the motor-driven compressor 22. The driving device 24 includes an inverter electrically connected to a DC or AC power source (DC power source is shown in Fig. 1) 26 and supplies the motor-driven compressor 22 with electricity via a wiring system 28.

In this embodiment, from the viewpoint of safety with respect to the human body, the voltage of the power source is lower than 60 volts and is set to, for example, 36 volts. In the case where the motor-driven compressor 22 is driven at a low voltage, relatively large electric current flows through the wiring system 28, the motor-driven compressor 22 and the like. Accordingly, a stator winding of a motor mounted in the motor-driven compressor 22 is divided into two circuits, and the wiring system 28 is similarly divided into two circuits.

The motor-driven compressor 22 is thus provided with two terminals 30, 32 secured to a shell thereof, and two circuits branched from an inverter output element 34 in the driving device 24 are electrically connected to the terminals 30, 32 via two connectors 36, 38, respectively.

As shown in Fig. 1, the motor includes a temperature sensor 40 for detecting the temperature of a motor coil, and the temperature sensor 40 is electrically connected to the driving device 24 via the terminal 30 and a connector 42. The terminal 30 is a 5-pin terminal.

In the air conditioner 20 of the above-described construction, a total of 70-80 amperes of electric current flows through the wiring system 28, the terminals 30, 32 and the stator winding of the motor-driven compressor 22, and the like. Accordingly, 5-mm² cables are generally used for the wiring system 28 and for stator leads in the motor-driven compressor 22, while connectors and terminals having a rated current of 50-60 amperes are generally used for the connectors 36, 38 and the terminals 30, 32, respectively.

It is to be noted that the terminals secured to the shell may include various modifications. By way of example, two 4-pin terminals may be used. In that case, it is preferred that two U-phase (U1 and U2) wires and two V-phase (V1 and V2) wires be connected to one of the 4-pin terminals, while two W-phase (W1 and W2) wires and two leads connected to the temperature sensor 40 be connected to the other of the 4-pin terminals. When the neighboring pins of the terminals are connected to the wires of the same phase in this manner, it is not necessary to take the insulating distance between the neighboring pins into account.

If the temperature sensor 40 for detecting the temperature of the motor coil is not provided, 3-pin terminals can be used for the terminals 30, 32. Alternatively, three 2-pin terminals may be used. In that case, it is preferred that the wires of the same phase be connected to the pins of the same terminal.

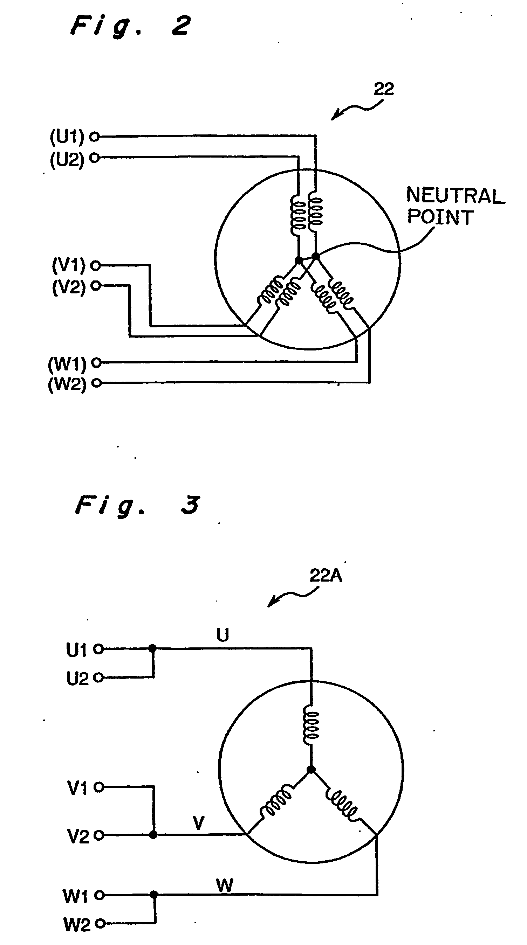

Fig. 2 schematically depicts a modification of the air conditioner 20 shown in Fig. 1. As shown therein, neutral points of parallel windings of two stator circuits in the motor-driven compressor 22 are electrically connected to each other.

In the case where the stator winding is divided into two circuits, a potential difference is generally created between the neutral points due to a slight difference in resistance of the winding. Although the potential difference between the neutral points causes a change in torque, it can be eliminated by electrically connecting the neutral points to each other to maintain them at the same potential.

Fig. 3 schematically depicts a stator winding and leads within a motor-driven compressor 22A for an air conditioner according to a second embodiment of the present invention. As shown therein, the stator winding is made up of one circuit, while each of leads connected to the stator winding is branched into two, which are in turn electrically connected to the terminal 30 or 32.

This arrangement makes it possible to reduce the diameter of the leads, thus enhancing the connecting workability.

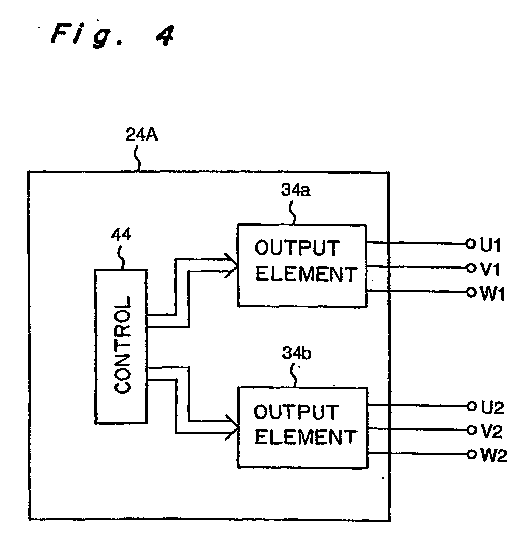

Fig. 4 schematically depicts a driving device 24A in an air conditioner according to a third embodiment of the present invention. The driving device 24A includes two inverter output elements 34a, 34b electrically connected to a controller 44 and to the circuits of the stator winding via the inverter output terminals, the wiring system 28, the terminals 30, 32, and the like.

According to this arrangement, instead of using one large-sized element, two small-sized elements can be used. As a result, the size of the driving device 24A can be reduced and each of the elements can be neatly arranged.

It is to be noted that although in the above-described embodiments the terminals have been described as having a rated current of 50-60 amperes, it is sufficient if the current capacity of each terminal is greater than a current value at the maximum load.

It is also to be noted that although in the above-described embodiments the wiring system or the stator winding has been described as having two circuits with respective component parts, the present invention is not limited to the two systems or circuits and is applicable to more than three systems or circuits.

Although the present invention has been fully described by way of examples with reference to the accompanying drawings, it is to be noted here that various changes and modifications will be apparent to those skilled in the art.

## Claims

1. An air conditioner (20) comprising a motor-driven compressor (22, 22A) and a driving device (24, 24A) for driving the motor-driven compressor (22, 22A), **characterized by**:
a wiring system (28) for electrically connecting the motor-driven compressor (22, 22A) and the driving device (24, 24A) to each other, the wiring system (28) being divided into at least two circuits.

2. The air conditioner (20) according to claim 1, wherein the motor-driven compressor (22) has a motor contained therein and having a stator winding that is divided into at least two circuits.

3. The air conditioner (20) according to claim 2, wherein the at least two circuits of the stator winding has respective neutral points electrically connected to each other.

4. The air conditioner (20) according to claim 1, wherein the motor-driven compressor (22A) has a motor contained therein and having a stator winding, and also has a plurality of leads connected to the stator winding, each of the plurality of leads being divided into at least two.

5. The air conditioner (20) according to any one of claims 1 to 4, wherein the motor-driven compressor (22, 22A) has a shell and at least two terminals (30, 32) secured to the shell and electrically connected to the wiring system (28).

6. The air conditioner (20) according to any one of claims 1 to 5, wherein the driving device (24A) comprises at least two output elements (34a, 34b) each electrically connected to one of the at least two circuits of the wiring system (28).

## Patentansprüche

1. Klimaanlage (20) mit einem motorisch angetriebenen Kompressor (22, 22A) und einer Antriebsvorrichtung (24, 24A) zum Antreiben des motorisch angetriebenen Kompressors (22, 22A),
**gekennzeichnet durch**:
ein Leitungssystem (28) zum elektrischen Verbinden des motorisch angetriebenen Kompressors (22, 22A) und der Antriebsvorrichtung (24, 24A),
wobei das Leitungssystem (28) in mindestens zwei Stromkreise unterteilt ist.

2. Klimaanlage (20) nach Anspruch 1,
wobei der motorisch angetriebene Kompressor (22) einen Motor enthält und eine Statorwicklung aufweist, die in mindestens zwei Stromkreise unterteilt ist.

3. Klimaanlage (20) nach Anspruch 2,
wobei die mindestens zwei Stromkreise der Statorwicklung jeweils elektrisch miteinander verbundene neutrale Punkte aufweisen.

4. Klimaanlage (20) nach Anspruch 1,
wobei der motorisch angetriebene Kompressor (22A) einen Motor enthält und eine Statorwicklung aufweist, und auch eine Mehrzahl von mit der Statorwicklung verbundene Leitungen aufweist, wobei jede der Mehrzahl von Leitungen in mindestens zwei unterteilt ist.

5. Klimaanlage (20) nach einem der Ansprüche 1 bis 4,
wobei der motorisch angetriebene Kompressor (22, 22A) ein Gehäuse und mindestens zwei Anschlüsse (30, 32) aufweist, die an dem Gehäuse befestigt und elektrisch mit dem Leitungssystem (28) verbunden sind.

6. Klimaanlage (20) nach einem der Ansprüche 1 bis 5,
wobei die Antriebsvorrichtung (24A) mindestens zwei Ausgangselemente (34a, 34b) aufweist, von denen jedes elektrisch mit einem der mindestens zwei Stromkreise des Leitungssystems (28) verbunden ist.

## Revendications

1. Dispositif de conditionnement d'air (20) comprenant un compresseur entraîné par moteur (22, 22A) et un dispositif d'entraînement (24, 24A) pour entraîner le compresseur entraîné par moteur (22, 22A), **caractérisé par** :
un système de câblage (28) pour relier électriquement le compresseur entraîné par moteur (22, 22A) et le dispositif d'entraînement (24, 24A) l'un à l'autre, le système de câblage (28) étant divisé en au moins deux circuits.

2. Dispositif de conditionnement d'air (20) selon la revendication 1, dans lequel le compresseur entraîné par moteur (22) contient un moteur et a un enroulement de stator qui est divisé en au moins deux circuits.

3. Dispositif de conditionnement d'air (20) selon la revendication 2, dans lequel les au moins deux circuits de l'enrgulement de stator ont des points neutres respectifs qui sont reliés électriquement l'un à l'autre.

4. Dispositif de conditionnement d'air (20) selon la revendication 1, dans lequel le compresseur entraîné par moteur (22A) contient un moteur, a un enroulement de stator et a également une pluralité de fils conducteurs reliés à l'enroulement de stator, chacun de la pluralité de fils conducteurs étant divisé au moins en deux.

5. Dispositif de conditionnement d'air (20) selon l'une quelconque des revendications 1 à 4, dans lequel le compresseur entraîné par moteur (22, 22A) a une enveloppe et au moins deux bornes (30, 32) fixées solidement à l'enveloppe et reliées électriquement au système de câblage (28).

6. Dispositif de conditionnement d'air (20) selon l'une quelconque des revendications 1 à 5, dans lequel le dispositif d'entraînement (24A) comprend au moins deux éléments de sortie (34a, 34b), reliés chacun électriquement à l'un des au moins deux circuits du système de câblage (28).
